# FASCICULE DE BREVET EUROPEEN

(11) **EP 0 876 705 B1**
(45) Date de publication et mention de la délivrance du brevet: **27.08.2003**
(21) Numéro de dépôt: 97901127.7
(22) Date de dépôt: 20.01.1997
(51) Int. Cl.: H02P 5/05, H02P 3/06

(54) **PROCEDE POUR ALIMENTER UN MOTEUR A RELUCTANCE VARIABLE A COMMUTATION ELECTRONIQUE ET CIRCUIT D'ALIMENTATION POUR SA MISE EN OEUVRE**
VERFAHREN ZUR VERSORGUNG EINES ELEKTRONISCH KOMMUTIERTEN RELUKTANZMOTORS UND SCHALTKREIS ZUR DURCHFÜHRUNG DES VERFAHRENS
METHOD FOR POWERING AN ELECTRONICALLY SWITCHED VARIABLE RELUCTANCE MOTOR, AND POWER SUPPLY CIRCUIT THEREFOR

(30) Priorité: 22.01.1996 FR 9600674
(43) Date de publication de la demande: 11.11.1998
(73) Titulaire: SEB S.A., 69130 Ecully (FR)
(72) Inventeur: GUINET, Michel, F-14610 Cambes en Plaine (FR)
(74) Mandataire: Kiehl, Hubert
(86) Numéro de dépôt international: FR9700109
(87) Numéro de publication internationale: WO97027665

(56) Documents cités:
- EP-A- 0 678 972
- KRISHNAN R ET AL: "EFFECT OF POWER FACTOR CORRECTION CIRCUIT ON SWITCHED RELUCTANCE MOTOR DRIVES FOR APPLIANCES" 13 Février 1994 , PROCEEDINGS OF THE ANNUAL APPLIED POWER ELECTRONICS CONFERENCE AND EXPOSITION (APEC), ORLANDO, FEB. 13 - 17, 1994, VOL. 1, PAGE(S) 83 - 89 , INSTITUTE OF ELECTRICAL AND ELECTRONICS ENGINEERS XP000467304 cité dans la demande voir page 83 - page 85, alinéa 3.1; figures 1,3,4
- IEEE TRANSACTIONS ON INDUSTRY APPLICATIONS, vol. IA-23, no. 3, Mai 1987 - Juin 1987, pages 545-552, XP002013191 MEHRDAD EHSANI ET AL.: "Development of a unipolar converter for variable reluctance motor drive"

## Description

La présente invention concerne un procédé pour alimenter un moteur à réluctance variable à commutation électronique, notamment à l'aide d'un convertisseur de type C-Dump. Elle vise également un circuit d'alimentation pour la mise en oeuvre de ce procédé.

On connaît déjà, d'après l'article "Development of a unipolar converter for variable reluctance motor drives" de M. EHSANI et al., IEEE Transactions on Industry Applications, Vol IA-23, N°3, Mai/Juin 1987, un procédé et un circuit d'alimentation d'un moteur à réluctance variable à commutation électronique mettant en oeuvre un convertisseur de type C-Dump. Ce procédé d'alimentation comprend, à partir d'une source de tension alternative monophasée :
- un redressement, dans un étage redresseur, de la tension délivrée par la source alternative monophasée pour fournir une tension redressée,
- successivement, pour chacune des phases de ce moteur :
   - une séquence de magnétisation de ladite phase comprenant un transfert d'énergie de l'étage redresseur vers ladite phase à laquelle on applique la tension redressée par fermeture de moyens de commutation associés à ladite phase,
   - une séquence de démagnétisation de ladite phase comprenant un transfert d'énergie de ladite phase vers un condensateur de stockage commun à l'ensemble des phases, lors de l'ouverture desdits moyens de commutation, et
- des séquences de renvoi de l'énergie stockée dans le condensateur vers l'étage redresseur par commande de moyens de hachage en série avec le condensateur de stockage.

Pour la mise en oeuvre de ce procédé, le circuit d'alimentation décrit dans cet article fait intervenir :
- un étage redresseur pour délivrer à partir d'une source de tension alternative monophasée une tension redressée,
- un étage convertisseur pour alimenter chacune des phases dudit moteur, cet étage convertisseur comprenant, pour chaque phase, des moyens de commutation de phase commandés pour magnétiser dans une fenêtre de temps déterminée ladite phase par application de la tension redressée, ces moyens de commutation de phase étant en outre commandés pour démagnétiser ladite phase par transfert de l'énergie magnétique stockée dans ladite phase vers un condensateur de stockage commun à l'ensemble des phases du moteur,
- des moyens pour renvoyer l'énergie stockée dans le condensateur de stockage vers l'étage redresseur, comprenant des moyens de hachage, et
- des moyens pour commander les moyens de commutation de phase et les moyens de hachage, en fonction de consignes de fonctionnement et de mesures de grandeurs électriques, notamment le courant d'alimentation redressé et la tension aux bornes du condensateur de stockage.

On observe toutefois que dans un tel procédé connu d'alimentation d'un moteur à commutation électronique, le courant redressé délivré par l'étage redresseur subit des perturbations à des fréquences multiples de la fréquence secteur. Ces perturbations peuvent conduire à un dépassement des valeurs des harmoniques de courant autorisées par la norme européenne CEI 555-2. On résout actuellement ce problème en filtrant le courant délivré par l'étage redresseur afin de le débarrasser des harmoniques de courant supérieurs à la fréquence du secteur. On insère par exemple un filtre, passif (à base de filtres L, C) ou actif (de type PFC : "Power Factor Correction" : Correction de Facteur de Puissance), entre l'étage redresseur et l'étage convertisseur, comme l'illustre par exemple l'article "Effect of Power Factor Correction Circuit on Switched Reluctance Motor Drives for Appliances" de R. KRISHNAN et S. LEE, APEC 94, Vol.1, Orlando, 13-17 Février 1994.

L'invention propose un procédé pour alimenter un moteur à réluctance variable à commutation électronique, qui permette de satisfaire à la fois des contraintes de faible coût et le respect des niveaux limites d'harmoniques édictés par la norme européenne précitée.

Suivant l'invention, un procédé d'alimentation du type décrit précédemment, est plus particulièrement caractérisé en ce qu'il comprend un contrôle de l'énergie renvoyée vers l'étage redresseur, en vue de corriger les perturbations du courant d'alimentation redressé.

Il devient ainsi possible de corriger les perturbations du courant d'alimentation et d'être en conformité avec les exigences actuelles en matière de compatibilité électromagnétique, sans devoir mettre en oeuvre systématiquement un filtrage passif ou actif en amont de l'étage convertisseur, et en utilisant de façon rationnelle les ressources énergétiques normalement présentes dans le condensateur d'un convertisseur de type C-Dump. Il en résulte un gain économique significatif par rapport aux solutions antérieures.

On entend plus généralement par perturbation du courant toute déformation de l'onde de courant par rapport à une onde de courant de référence, cette déformation pouvant être induite par tout phénomène physique identifié ou non, d'origine interne ou externe au système d'entraînement concerné.

Les perturbations du courant d'alimentation redressé peuvent par exemple être corrigées par rapport à une onde de courant de référence. Dans un mode particulier de mise en oeuvre du procédé selon l'invention, le contrôle de l'énergie renvoyée comprend une modulation du rapport cyclique de hachage. On peut prévoir par exemple que ce rapport cyclique soit modulé autour d'une valeur moyenne sensiblement constante. La valeur moyenne du rapport cyclique de hachage est alors de préférence choisie voisine de 1/2 pour maintenir une valeur moyenne de la tension aux bornes du condensateur de stockage proche de deux fois la tension d'alimentation redressée, afin d'assurer une démagnétisation correcte des phases du moteur.

Dans une forme préférée de mise en oeuvre, ce procédé comprend en outre une mesure du courant d'alimentation redressé, et une comparaison de ce courant mesuré avec l'onde de courant de référence, pour déterminer les perturbations à corriger.

Dans un premier mode de mise en oeuvre du procédé selon l'invention, pendant la séquence de renvoi d'énergie, une inductance faisant fonction de tampon magnétique est interposée entre le condensateur de stockage et l'étage convertisseur.

Dans un second mode de mise en oeuvre du procédé selon l'invention, pendant la séquence de renvoi d'énergie, l'énergie stockée dans le condensateur est directement transférée vers l'étage convertisseur, et le procédé comprend alors un filtrage du courant d'alimentation redressé.

Par ailleurs, le procédé selon l'invention peut avantageusement comporter en outre une correction du facteur de puissance de l'ensemble moteur/étage convertisseur en fonction notamment de la mesure de la tension d'alimentation redressée et du courant d'alimentation redressé.

L'invention vise également un circuit d'alimentation assurant la mise en oeuvre du procédé ci-dessus.

A cet effet, suivant l'invention, un circuit d'alimentation du type décrit précédemment, est plus particulièrement caractérisé en ce que les moyens de commande sont agencés pour commander selon un rapport cyclique variable les moyens de hachage de façon à corriger les perturbations observées sur le courant d'alimentation redressé.

Dans une première forme de réalisation d'un circuit selon l'invention, celui-ci comprend en outre une inductance disposée entre les moyens de hachage et l'étage convertisseur et faisant fonction de tampon magnétique.

Dans une seconde forme de réalisation d'un circuit selon l'invention, celui-ci comprend en outre un étage de filtrage disposé entre l'étage redresseur et l'étage convertisseur.

D'autres particularités et avantages de l'invention apparaîtront encore dans la description ci-après. Aux dessins annexés donnés à titre d'exemples non limitatifs:
- la figure 1 est un schéma synoptique d'un système de motorisation à réluctance variable mettant en oeuvre le procédé et le circuit d'alimentation selon l'invention ;
- la figure 2 illustre une première forme de réalisation d'un circuit d'alimentation selon l'invention ;
- les figures 3A, 3B et 3C représentent de façon schématique les transferts d'énergie au sein du circuit représenté en figure 2, respectivement dans les séquences de magnétisation, de démagnétisation et de renvoi d'énergie ;
- la figure 4 illustre une seconde forme de réalisation d'un circuit d'alimentation selon l'invention ;
- les figures 5A, 5B, et 5C représentent de façon schématique les transferts d'énergie au sein du circuit représenté en figure 4, respectivement dans les séquences de magnétisation, de démagnétisation et de renvoi d'énergie ; et
- la figure 6 est une variante du circuit représenté en figure 4.

On va maintenant décrire, en référence aux figures précitées, la structure générale d'un circuit d'alimentation selon l'invention et deux exemples de réalisation, en même temps que le procédé d'alimentation mis en oeuvre dans ces circuits.

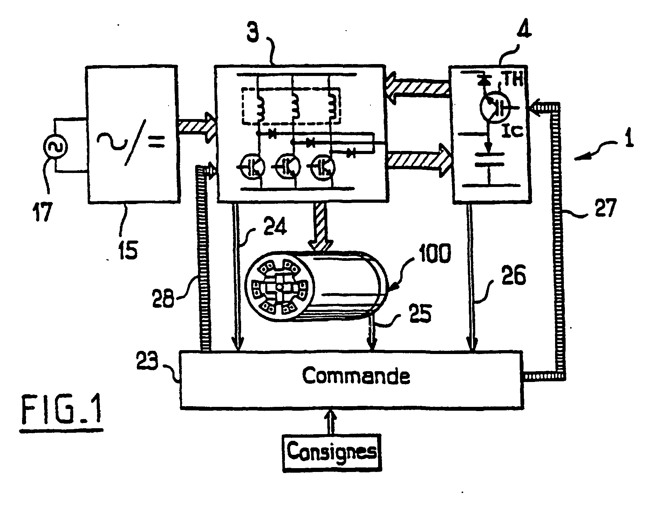

Un système d'entraînement à vitesse variable 1 mettant en oeuvre le procédé selon l'invention comprend, en référence à la figure 1, un étage redresseur 15 connecté à une source de tension alternative monophasée 17, par exemple le secteur, un étage convertisseur 3 alimentant les trois phases d'un moteur à réluctance variable à commutation électronique 100, un étage 4 de renvoi d'énergie , et un dispositif de commande 23 recevant en entrée des consignes, des informations de position angulaire 25 du rotor du moteur et des mesures 24, 26 de grandeurs physiques associées au système, et générant des ordres de commande 28, 27 d'interrupteurs électroniques de l'étage convertisseur 3 et d'un interrupteur de hachage TH de l'étage de renvoi d'énergie 4.

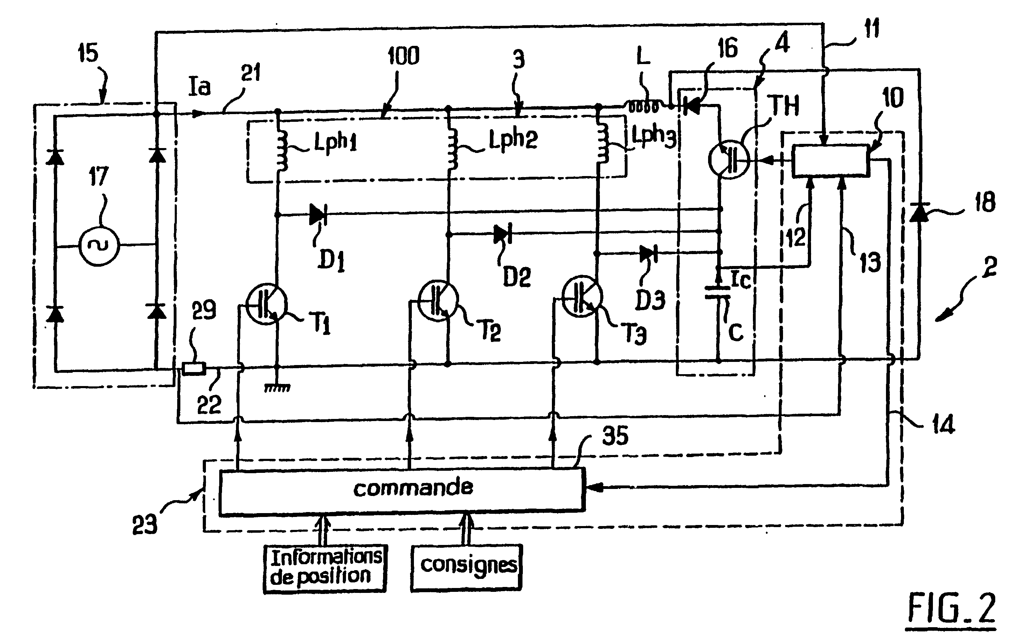

Dans un premier mode de réalisation du circuit d'alimentation 2 représenté en figure 2, l'étage convertisseur 3 est directement relié à la sortie de l'étage redresseur 15 sans adjonction de filtre, et une inductance L est disposée entre le point commun haut de l'étage convertisseur 3 et l'étage de renvoi d'énergie 4. L'étage redresseur 15 peut présenter la structure classique d'un pont à quatre diodes. L'étage convertisseur 3 est du type C-Dump. Il comprend une ligne haute 21 et une ligne basse 22 reliées respectivement aux bornes de sortie de l'étage redresseur 15, et trois branches connectées en parallèle comportant chacune un interrupteur de puissance T1, T2, T3, par exemple un transistor IGBT, relié d'une part, à une borne d'une phase du moteur 100, et d'autre part à la ligne basse 22. Les trois phases Lph1, Lph2, Lph3 sont reliées en étoile et leur connexion commune est reliée à la ligne haute de l'étage convertisseur 3. Par ailleurs, une diode de roue libre 18 est classiquement prévue entre les lignes haute et basse 21, 22 pour assurer une continuité du courant appelé par l'étage convertisseur 3 et ainsi éviter des surtensions. A chaque point de connexion d'un interrupteur T1, T2, T3 et de la phase Lph1, Lph2, Lph3 qui lui est associée est reliée l'anode d'une diode de démagnétisation D1, D2, D3. L'étage de renvoi d'énergie 4 comprend en série un condensateur de stockage C, un interrupteur de hachage TH et une diode 16. Les cathodes des trois diodes de démagnétisation D1, D2, D3 sont reliées au point de connexion entre le condensateur de stockage C et l'interrupteur de hachage TH qui peut être par exemple un transistor IGBT. Un dispositif de commande 23 du système 1 comprend un module de commande 10 de l'interrupteur de hachage TH et un module de commande 35 des trois interrupteurs de phase T1, T2, T3. Le module de commande de hachage 10 reçoit une mesure 11 de la tension d'alimentation redressée, une mesure 12 de la tension aux bornes du condensateur de stockage C, une mesure 13 du courant d'alimentation redressée Ia fournie aux bornes d'un shunt 29, et en retour génère des ordres de commande de l'interrupteur de hachage TH et des ordres de contrôle 14 du module de commande de phase 35. Celui-ci reçoit également des informations de position du rotor du moteur, fournies par exemple par un capteur de position angulaire, et des consignes de fonctionnement, par exemple, une consigne de vitesse, et génère en retour des ordres de commande des interrupteurs de phase T1, T2, T3.

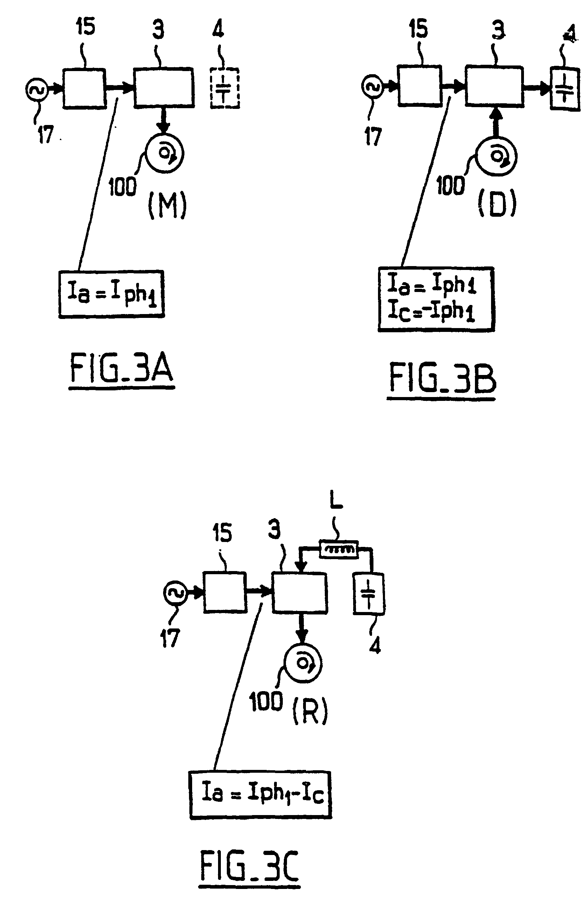

On va maintenant décrire le fonctionnement de ce circuit d'alimentation selon l'invention, en même temps que les transferts d'énergie réalisés au cours des différentes séquences du procédé selon l'invention, en référence aux figures 2 et 3A à 3C. Il faut noter que, pour des raisons de simplification, les flux d'énergie dans les figures 3A à 3C ne sont représentés que pour une seule phase.

L'étage redresseur 15 délivre une tension redressée sous la forme d'arches double-alternance. Le courant d'alimentation redressé Ia débité par cet étage redresseur 15 est fonction des différentes commutations de phase qui sont effectuées à fréquence variable. L'objectif du procédé selon l'invention est de tendre vers un courant d'alimentation redressé qui présenterait une forme d'onde homothétique de celle de la tension redressée. Chaque phase Lph1, Lph2, Lph3 du moteur 100 est soumise à des séquences successives de magnétisation (M) et de démagnétisation (D) au rythme des commutations de phase.

Il faut noter que, selon les modes de commande mis en oeuvre, il peut y avoir simultanéité d'une séquence de magnétisation sur une phase et d'une séquence de démagnétisation sur une autre phase. De façon plus générale, le procédé d'alimentation selon l'invention peut être mis en oeuvre quel que soit le niveau de superposition entre séquences respectives de magnétisation et de démagnétisation concernant les différentes phases du moteur.

Au cours d'une séquence de magnétisation (M) d'une phase donnée du moteur, de l'énergie électrique est transférée de la source 17, via l'étage redresseur 15 et une branche de l'étage convertisseur 3, vers une phase du moteur où elle est pour une partie convertie sous forme d'énergie mécanique et pour une autre partie stockée sous forme d'énergie magnétique dans le moteur (figure 3A). Le courant d'alimentation Ia est alors égal à la somme des courants dans les trois phases du moteur. Lorsque l'interrupteur de phase correspondant est à nouveau bloqué, commence alors une séquence de démagnétisation (D) au cours de laquelle l'énergie magnétique stockée dans le moteur 100 est transférée via la diode de démagnétisation dans le condensateur de stockage sous forme d'énergie électrostatique (figure 3B). Au cours de la séquence de démagnétisation (D), l'étage redresseur 4 continue à fournir de l'énergie électrique au système. Cette démagnétisation est rendue possible par le fait que la tension aux bornes du condensateur de stockage est maintenue à une tension moyenne voisine du double de la tension d'alimentation redressée. L'étage de hachage 4 est commandé en mode passant d'une part, lorsque la tension aux bornes du condensateur de stockage dépasse une valeur limite de sécurité, et d'autre part, lorsque le courant d'alimentation mesuré devient supérieur à une consigne liée à une onde de courant de référencé. Le hachage est ainsi réalisé à une fréquence de hachage et à un rapport cyclique variables. Au cours d'une séquence de renvoi d'énergie (R), une fraction de l'énergie stockée dans le condensateur de stockage C est transférée via l'inductance L vers l'étage redresseur 15, tandis que l'interrupteur de phase est alors en mode passant. Le courant d'alimentation Ia est alors égal à la différence entre la somme ΣIph des courants dans les phases du moteur et le courant Ic délivré par le condensateur de stockage C. Lorsque le courant d'alimentation mesuré devient plus faible que le courant de l'onde de référence, l'interrupteur de hachage est alors commuté en mode bloqué et la séquence de renvoi d'énergie est terminée. On peut également prévoir que la commande de l'interrupteur de hachage TH ne soit effective que lorsque la tension mesurée aux bornes du condensateur de stockage C soit supérieure à la tension d'alimentation redressée mesurée.

Une différence essentielle du procédé d'alimentation selon l'invention avec les procédés classiques réside dans le fait qu'on corrige les perturbations du courant d'alimentation sans adjonction de composants de puissance supplémentaires, en appliquant un régime de rapport cyclique variable à l'interrupteur de hachage du montage C-Dump.

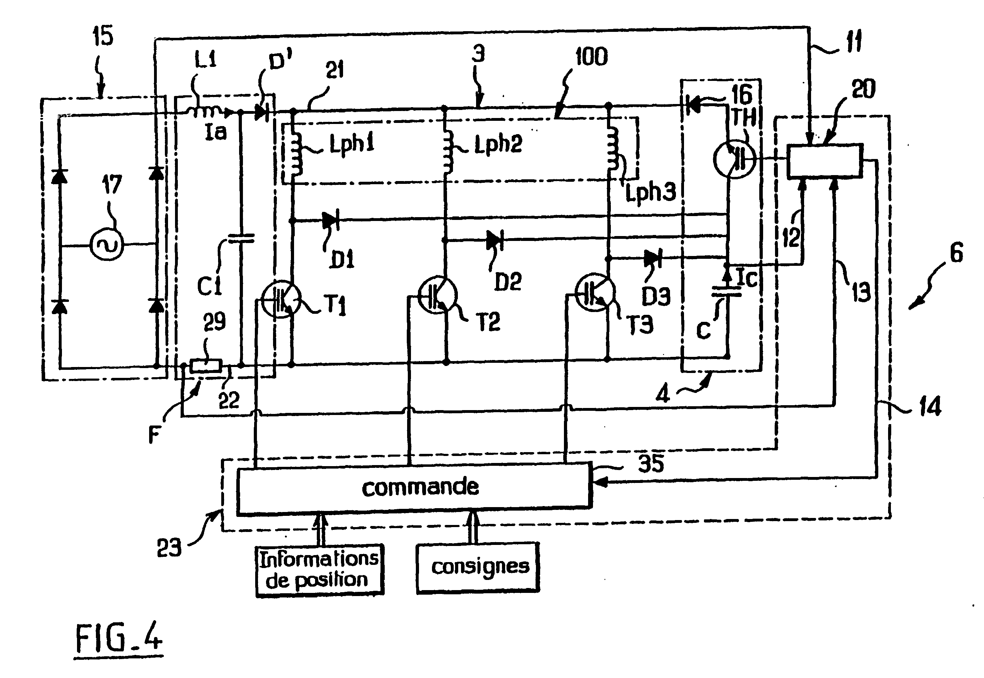

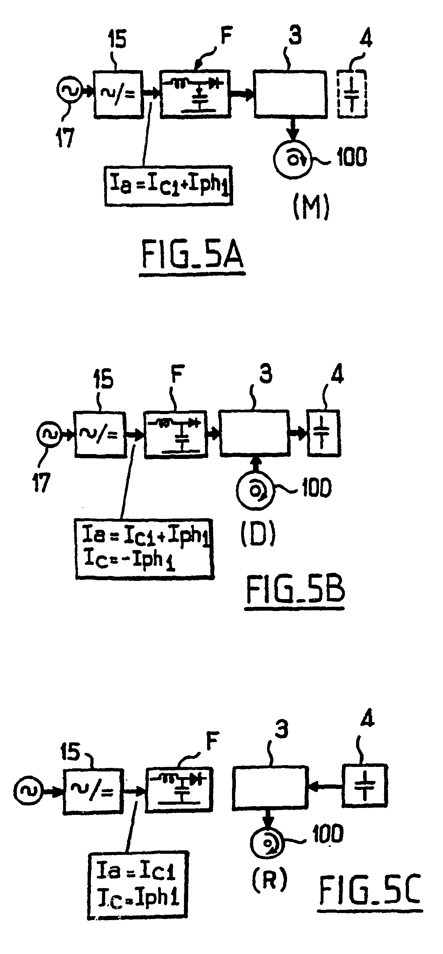

On va maintenant décrire, en référence à la figure 4, un second mode de mise en oeuvre du procédé d'alimentation selon l'invention et un exemple de réalisation d'un circuit d'alimentation correspondant. Dans les figures 4 et 5A à 5C, on a donné les mêmes références aux composants et modules identiques déjà décrits en référence aux figures 2 et 3A à 3C. Il faut noter que, pour des raisons de simplification, les flux d'énergie dans les figures 5A à 5C ne sont représentés que pour une seule phase.

Le circuit d'alimentation 6 selon l'invention comprend un étage redresseur 15, un étage de filtrage F, un étage convertisseur 3 relié aux trois phases d'un moteur à réluctance variable à commutation électronique 100, et un étage de renvoi d'énergie 4. L'étage de filtrage F comprend par exemple un filtre passif comportant classiquement une inductance L1 et un condensateur C1, et une diode D' pour isoler d'une part l'étage de filtrage et d'autre part l'étage convertisseur au cours de la séquence de renvoi. L'étage de renvoi d'énergie 4 est, dans cette forme particulière de réalisation, directement relié à l'étage convertisseur 3 sans adjonction d'inductance, ni de diode de roue libre en parallèle sur l'étage de hachage.

On va maintenant décrire le fonctionnement de ce circuit d'alimentation selon l'invention, en même temps que les transferts d'énergie réalisés au cours des différentes séquences du procédé selon l'invention, en référence aux figures 4 et 5A à 5C. Les séquences de magnétisation et de démagnétisation (figures 5A et 5B) sont semblables aux séquences décrites pour le premier mode de réalisation, hormis le fait que l'étage de filtrage F est mis à contribution. Dans les séquences de renvoi d'énergie (R), lorsque l'interrupteur de hachage TH est commandé en mode passant, la tension aux bornes du condensateur de stockage C est directement appliquée sur la ligne haute 21. Comme cette tension est alors nécessairement supérieure à la tension d'alimentation redressée, la diode D' se bloque et le courant d'alimentation Ia va alors décroître. Dès qu'un ordre de blocage est appliqué à l'interrupteur de hachage TH, la diode D' redevient passante et le courant d'alimentation redressé tend alors à augmenter. On montre qu'un filtre de dimensionnement modeste est suffisant. Au cours de la séquence de renvoi d'énergie, le courant d'alimentation Ia est égal au courant absorbé Ic1 par le condensateur de filtrage C1, tandis que le courant Ic fourni par le condensateur C est égal au courant de magnétisation circulant dans une ou plusieurs phases.
Les modules de commande de hachage 10, 20 incluant de préférence un circuit de correction de facteur de puissance (PFC) qui délivre un signal indicatif du caractère faible ou élevé du courant d'alimentation, à partir de l'information de courant référence (obtenue en pratique à partir de la mesure de la tension d'alimentation redressée) et de l'information de courant d'alimentation effectivement mesuré.

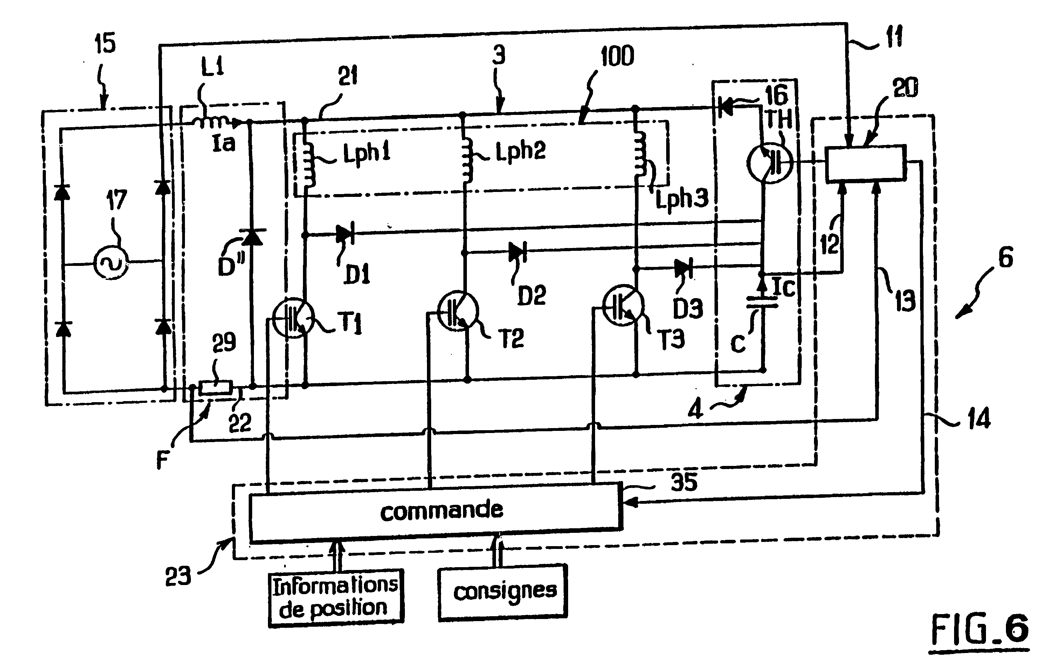

La figure 6 illustre une variante du circuit d'alimentation de la figure 4, dans laquelle on a donné les mêmes références aux composants et modules identiques déjà décrits en référence à la figure 4. Cette variante se différencie du circuit d'alimentation représenté figure 4 uniquement par le fait que l'étage de filtrage F comprend, outre l'inductance L1 disposée dans la ligne haute 21 du circuit, une diode D" disposée entre les lignes haute 21 et basse 22 du circuit, l'anode de cette diode étant reliée à la ligne basse 22. Ainsi, cet étage de filtrage F présente l'avantage d'être notablement simplifié, d'où une réduction de son coût de réalisation. Le fonctionnement de cette variante du circuit d'alimentation, ainsi que les transferts d'énergie réalisés au cours des différentes séquences du procédé selon l'invention, sont semblables à ceux décrits en référence aux figures 5A à 5C.

Bien sûr, l'invention n'est pas limitée aux exemples qui viennent d'être décrits et de nombreux aménagements peuvent être apportés à ces exemples sans sortir du cadre de l'invention. Ainsi, le nombre de phases du moteur peut être quelconque. Les interrupteurs de phase et de hachage peuvent être des transistors de technologie quelconque, par exemple des transistors bipolaires, MOSFET ou IGBT. Les modules de commande peuvent être réalisés en logique câblée ou programmée et inclure un microcontrôleur. Par ailleurs, les circuits d'alimentation selon l'invention peuvent être intégrés sous la forme de circuits ASIC ou bien être réalisés à base de composants discrets.

## Revendications

1. Procédé pour alimenter un moteur à réluctance variable à commutation électronique (100) à partir d'une source de tension alternative monophasée (17), comprenant:
- un redressement, dans un étage redresseur (15), de la tension délivrée par la source alternative monophasée (17) pour fournir une tension redressée,
- successivement, pour chacune des phases (Lph1, Lph2, Lph3) de ce moteur (100):
- une séquence de magnétisation (M) de ladite phase (Lph1, Lph2, Lph3) comprenant un transfert d'énergie de l'étage redresseur (15) vers ladite phase (Lph1, Lph2, Lph3) à laquelle on applique la tension redressée par fermeture de moyens de commutation (T1, T2, T3) associés à ladite phase (Lph1, Lph2, Lph3),
- une séquence de démagnétisation (D) de ladite phase (Lph1, Lph2, Lph3) comprenant un transfert d'énergie de ladite phase (Lph1, Lph2, Lph3) vers un condensateur de stockage (C) commun à l'ensemble des phases (Lph1, Lph2, Lph3), lors de l'ouverture desdits moyens de commutation (T1, T2, T3), et
- des séquences de renvoi (R) de l'énergie stockée dans le condensateur de stockage (C) vers l'étage redresseur (15) par commande de moyens de hachage (TH) en série avec le condensateur de stockage (C),
**caractérisé en ce qu'**il comprend un contrôle de l'énergie renvoyée vers l'étage redresseur (15), en vue de corriger les perturbations du courant d'alimentation redressé (Ia).

2. Procédé selon la revendication 1, **caractérisé en ce qu'**on corrige les perturbations du courant d'alimentation redressé (Ia) par rapport à une onde de courant de référence.

3. Procédé selon l'une des revendications 1 ou 2, **caractérisé en ce que** le contrôle de l'énergie renvoyée comprend une modulation du rapport cyclique de hachage.

4. Procédé selon la revendication 3, **caractérisé en ce que** le rapport cyclique de hachage est modulé autour d'une valeur moyenne sensiblement constante.

5. Procédé selon la revendication 4, **caractérisé en ce que** la valeur moyenne du rapport cyclique de hachage est voisine de 1/2.

6. Procédé selon l'une des revendications précédentes, **caractérisé en ce qu'**il comprend en outre une mesure du courant d'alimentation redressé (Ia), et une comparaison de ce courant mesuré avec l'onde de courant de référence, pour déterminer les perturbations à corriger.

7. Procédé selon l'une des revendications précédentes, **caractérisé en ce que**, pendant la séquence de renvoi d'énergie (R), une inductance (L) faisant fonction de tampon magnétique est interposée entre le condensateur de stockage (C) et l'étage redresseur (15).

8. Procédé selon l'une des revendications 1 à 6, **caractérisé en ce que**, pendant la séquence de renvoi d'énergie (R), l'énergie stockée dans le condensateur de stockage (C) est directement transférée vers l'étage redresseur (15), et **en ce qu'**il comprend en outre un filtrage du courant d'alimentation redressé (Ia).

9. Procédé selon l'une des revendications précédentes, **caractérisé en ce qu'**il comprend en outre une correction du facteur de puissance de l'ensemble moteur/convertisseur en fonction notamment de la mesure de la tension d'alimentation redressée et du courant d'alimentation redressé.

10. Circuit pour alimenter un moteur à réluctance variable à commutation électronique (100), comprenant:
- un étage redresseur (15) pour délivrer à partir d'une source de tension alternative monophasée (17) une tension redressée,
- un étage convertisseur (3) pour alimenter chacune des phases (Lph1, Lph2, Lph3) dudit moteur (100), cet étage convertisseur (3) comprenant, pour chaque phase (Lph1, Lph2, Lph3), des moyens de commutation de phase (T1, T2, T3) commandés pour magnétiser dans une fenêtre de temps déterminée ladite phase (Lph1, Lph2, Lph3) par application de la tension redressée, ces moyens de commutation de phase (T1, T2, T3) étant en outre commandés pour démagnétiser ladite phase (Lph1, Lph2, Lph3) par transfert de l'énergie magnétique stockée dans ladite phase (Lph1, Lph2, Lph3) vers un condensateur de stockage (C) commun à l'ensemble des phases du moteur (100),
- des moyens (4) pour renvoyer l'énergie stockée dans le condensateur de stockage (C) vers l'étage redresseur (15), comprenant des moyens de hachage (TH), et
- des moyens (23, 10, 20, 35) pour commander les moyens de commutation de phase (T1, T2, T3) et les moyens de hachage (TH), en fonction de consignes de fonctionnement et de mesures de grandeurs électriques, notamment le courant d'alimentation redressé et la tension aux bornes du condensateur de stockage;
**caractérisé en ce que** les moyens de commande (23, 10, 20, 35) sont agencés pour commander selon un rapport cyclique variable les moyens de hachage (TH) de façon à corriger les perturbations observées sur le courant d'alimentation redressé (Ia).

11. Circuit selon la revendication 10, **caractérisé en ce qu'**il comprend en outre une inductance (L) disposée entre les moyens de hachage (4) et l'étage convertisseur (3) et faisant fonction de tampon magnétique.

12. Circuit selon la revendication 10, **caractérisé en ce que** les moyens de hachage (4) sont directement reliés à l'étage convertisseur (3) et **en ce qu'**il comprend en outre un étage de filtrage (F) disposé entre l'étage redresseur (15) et l'étage convertisseur (3).

13. Circuit selon la revendication 12, **caractérisé en ce que** l'étage de filtrage (F) comprend une inductance (L1) disposée dans la ligne haute (21) de l'étage redresseur (15), et une diode (D") disposée entre les lignes haute (21) et basse (22) dudit étage redresseur, l'anode de la diode (D") étant reliée à ladite ligne basse (22).

14. Circuit selon l'une des revendications 10 à 13, **caractérisé en ce que** les moyens de commande (23) comprennent des moyens pour corriger le facteur de puissance de l'ensemble moteur/convertisseur.

## Patentansprüche

1. Verfahren zur Versorgung eines elektronisch kommutierten Reluktanzmotors (100) mit variabler Reluktanz von einer Einphasen-Wechselstromquelle (17) mit
- einer Gleichrichtung der von der Einphasen-Wechselstromquelle (17) gelieferten Spannung in einer Gleichrichterstufe (15), um eine gleichgerichtete Spannung zu liefern,
- nacheinander, für jede der Phasen (Lph1, Lph2, Lph3) dieses Motors (100):
- einem Magnetisierungsschritt (M) der Phase (Lph1, Lph2, Lph3) mit einer Energieübertragung von der Gleichrichterstufe (15) zu dieser Phase (Lph1, Lph2, Lph3), an die man die gleichgerichtete Spannung anlegt durch Schließen der Kommutierungsvorrichtung (T1, T2, T3), die zu dieser Phase (Lph1, Lph2, Lph3) gehört,
- einem Entmagnetisierungsschritt (D) dieser Phase (Lph1, Lph2, Lph3) mit einer Energieübertragung von dieser Phase (Lph1, Lph2, Lph3) zu einem für die Gesamtheit der Phasen (Lph1, Lph2, Lph3) gemeinsamen Speicherkondensator (C) beim Öffnen der Kommutierungsvorrichtungen (T1, T2, T3) und
- Rückführungsschritten (R) der im Speicherkondensator (C) gespeicherten Energie zur Gleichrichterstufe (15) durch Steuerung von in Reihe mit dem Speicherkondensator (C) liegenden Zerhackervorrichtung (TH),
**dadurch gekennzeichnet, daß** es eine Steuerung der zur Gleichrichterstufe (15) zurückgeführten Energie umfaßt, um die Störungen des gleichgerichteten Versorgungsstroms (Ia) zu korrigieren.

2. Verfahren nach Anspruch 1, **dadurch gekennzeichnet, daß** man die Störungen des gleichgerichteten Versorgungsstroms (Ia) bezüglich einer Referenz-Stromwelle korrigiert.

3. Verfahren nach einem der Ansprüche 1 oder 2, **dadurch gekennzeichnet, daß** die Steuerung der zurückgeführten Energie eine Modulation des zyklischen Zerhakkertastverhältnisses umfaßt.

4. Verfahren nach Anspruch 3, **dadurch gekennzeichnet, daß** das zyklische Zerhackertastverhältnis um einen im wesentlichen konstanten Mittelwert herum moduliert wird.

5. Verfahren nach Anspruch 4, **dadurch gekennzeichnet, daß** der Mittelwert des zyklischen Zerhackertastverhältnisses in der Nähe von ½ liegt.

6. Verfahren nach einem der vorangehenden Ansprüche, **dadurch gekennzeichnet, daß** es außerdem eine Messung des gleichgerichteten Versorgungsstroms (Ia) und einen Vergleich dieses gemessenen Stroms mit der Wellenform des Referenzstroms umfaßt, um die zu korrigierenden Störungen zu bestimmen.

7. Verfahren nach einem der vorangehenden Ansprüche, **dadurch gekennzeichnet, daß** während des Energierückführungsschritts (R) eine Induktivität (L) die als magnetischer Puffer wirkt, zwischen den Speicherkondensator (C) und die Gleichrichterstufe (15) eingeschaltet ist.

8. Verfahren nach einem der Ansprüche 1 bis 6, **dadurch gekennzeichnet, daß** während des Schritts der Energierückführung (R) die im Speicherkondensator (C) gespeicherte Energie direkt zur Gleichrichterstufe (15) übertragen wird und daß das Verfahren außerdem eine Filterstufe des gleichgerichteten Versorgungsstroms (Ia) umfaßt.

9. Verfahren nach einem der vorangehenden Ansprüche, **dadurch gekennzeichnet, daß** es außerdem eine Korrektur des Leistungsfaktors der Gesamtheit Motor/Umformer in Abhängigkeit insbesondere von der Messung der gleichgerichteten Versorgungsspannung und des gleichgerichteten Versorgungsstroms umfaßt.

10. Schaltkreis zur Versorgung eines elektronisch kommutierten Reluktanzmotors (100) mit variabler Reluktanz mit
- einer Gleichrichterstufe (15), die ausgehend von einer Einphasen-Wechselspannungsquelle (17) eine gleichgerichtete Spannung liefert,
- einer Umformerstufe (3), die jede der Phasen (Lph1, Lph2, Lph3) des Motors (100) versorgt, wobei diese Umformerstufe (3) für jede Phase (Lph1, Lph2, Lph3) Phasen-Kommutierungsvorrichtungen (T1, T2, T3) aufweist, die so gesteuert sind, daß sie in einem bestimmten Zeitfenster die Phase (Lph1, Lph2, Lph3) durch Anlegen der gleichgerichteten Spannung magnetisieren, wobei diese Phasen-Kommutierungsvorrichtungen (T1, T2, T3) außerdem so gesteuert sind, daß sie die Phase (Lph1, Lph2, Lph3) durch Übertragung der in dieser Phase (Lph1, Lph2, Lph3) gespeicherten magnetischen Energie zu einem für die Gesamtheit der Phasen des Motors (100) gemeinsamen Speicherkondensator (C) entmagnetisieren,
- einer Vorrichtung (4), welche die im Speicherkondensator (C) gespeicherte Energie zur Gleichrichterstufe (15) zurückführr, wobei diese Vorrichtung eine Zerhackervorrichtung (TH) umfaßt, und
- Vorrichtungen (23, 10, 20, 35), welche die Phasen-Kommutierungsvorrichtungen (T1, T2, T3) und die Zerhackervorrichtung (TH) in Abhängigkeit von Betriebseinstellwerten und Meßwerten elektrischer Größen besonders des gleichgerichteten Versorgungsstroms und der Spannung an den Klemmen des Speicherkondensators steuern;
**dadurch gekennzeichnet, daß** die Steuervorrichtungen (23, 10, 20, 35) so ausgebildet sind, daß sie die Zerhackervorrichtung (TH) gemäß einem variablen zyklischen Verhältnis so steuern, daß die am gleichgerichteten Versorgungsstrom (Ia) beobachteten Störungen korrigiert werden.

11. Schaltkreis nach Anspruch 10, **dadurch gekennzeichnet, daß** er außerdem eine Induktivität (L) umfaßt, die zwischen der Zerhackervorrichtung (4) und der Umformerstufe (3) angeordnet ist und als magnetischer Puffer wirkt.

12. Schaltkreis nach Anspruch 10, **dadurch gekennzeichnet, daß** die Zerhackervorrichtung (4) direkt mit der Umformerstufe (3) verbunden ist und daß der Schaltkreis außerdem eine Filterstufe (F) aufweist, die zwischen der Gleichrichterstufe (15) und der Konvertierungsstufe (3) angeordnet ist.

13. Schaltkreis nach Anspruch 12, **dadurch gekennzeichnet, daß** die Filterstufe (F) eine Induktivität (L1) umfaßt, die in der oberen Leitung (21) der Gleichrichterstufe (15) angeordnet ist, und eine Diode (D") umfaßt, die zwischen der oberen Leitung (21) und unteren Leitung (22) der Gleichrichterstufe angeordnet ist, wobei die Anode der Diode (D") mit der unteren Leitung (22) verbunden ist.

14. Schaltkreis nach einem der Ansprüche 10 bis 13, **dadurch gekennzeichnet, daß** die Steuervorrichtung (23) eine Vorrichtung umfaßt, die den Leistungsfaktor der Gesamtheit Motor/Umformer korrigiert.

## Claims

1. Method for feeding an electronically switched variable reluctance motor (100) from a single phase AC voltage source (17), comprising :
- a rectifying, in a rectifying stage (15), of the voltage delivered by the single phase AC source (17) to supply a DC voltage,
- successively, for each of the phases (Lph1, Lph2, Lph3) of this motor (100) :
- a magnetising sequence (M) of said phase (Lph1, Lph2, Lph3), comprising a transfer of energy from the rectifying stage (15) to the said phase (Lph1, Lph2, Lph3), to each of which the DC voltage is applied by closing switching means (T1, T2, T3) associated with the said phase (Lph1, Lph2, Lph3),
- a demagnetising sequence (D) of said phase (Lph1, Lph2, Lph3), comprising a transfer of energy from the said phase (Lph1, Lph2, Lph3) to a storage capacitor (C) common to all the phases (Lph1, Lph2, Lph3), during the opening of the said switching means (T1, T2, T3), and
- sequences (R) for returning the energy stored in the storage capacitor (C) to the rectifying stage (15) by controlling chopping means (TH) in series with the storage capacitor (C),
**characterised in that** it includes a control of the energy returned to the rectifying stage (15), in view of correcting fluctuations of the DC feed current (Ia).

2. Method according to claim 1, **characterised in that** fluctuations of the DC feed current (Ia) are corrected by comparing it with a reference current wave.

3. Method according to one of claims 1 and 2, **characterised in that** control of the returned energy includes a modulation of the cyclic chopping ratio.

4. Method according to claim 3, **characterised in that** the cyclic chopping ratio is modulated about an approximately constant average value.

5. Method according to claim 4, **characterised in that** the average value of the cyclic chopping ratio is approximately ½.

6. Method according to anyone of the preceding claims, **characterised in that** it also includes a measurement of the DC feed current (Ia) and a comparison of this measured current with the reference current wave, in order to determine the fluctuations to be corrected.

7. Method according to anyone of the preceding claims, **characterised in that**, during the energy return sequence (R), an inductance (L) fulfilling the function of a magnetic damper is interposed between the storage capacitor (C) and the rectifying stage (15).

8. Method according to anyone of claims 1 to 6, **characterised in that**, during the energy return sequence (R), the energy stored in the storage capacitor (C) is transferred directly to the rectifying stage (15), and **in that** it also includes a filtering of the DC feed current (Ia).

9. Method according to anyone of the preceding claims, **characterised in that** it also includes a correction of the motor/converter assembly power factor, dependent in particular on measurement of the DC feed voltage and the DC feed current.

10. Circuit for feeding an electronically switched variable reluctance motor (100), comprising :
- a rectifying stage (15) to deliver a DC voltage from a single phase AC voltage source (17),
- a converter stage (3) to feed each of the phases (Lph1, Lph2, Lph3) of the said motor, this converter stage including, for each phase (Lph1, Lph2, Lph3), phase switching means (T1, T2, T3) controlled in order to magnetise the said phase (Lph1, Lph2, Lph3) in a set time window by applying the DC voltage, these phase switching means (T1, T2, T3) being also controlled in order to demagnetise the said phase (Lph1, Lph2, Lph3) by transferring the magnetic energy stored in the said phase (Lph1, Lph2, Lph3) to a storage capacitor (C) common to all phases of the motor (100),
- means (4) for returning the energy stored in the storage capacitor (C) to the rectifying stage (15), including chopping means (TH), and
- means (23, 10, 20, 35) for controlling the phase switching means (T1, T2, T3) and the chopping means (TH), according to the operating instructions and measurement of electrical parameters, in particular the DC feed current and the potential difference across the capacitor terminals ;
**characterised in that** the control means (23, 10, 20, 35) are set to control the chopping means (TH) according to a variable cyclic ratio, in order to correct observed fluctuations of the DC feed current (Ia).

11. Circuit according to claim 10, **characterised in that** it also includes an inductance (L) placed between the chopping means (4) and the converter stage (3), and fulfilling a magnetic damper function.

12. Circuit according to claim 10, **characterised in that** the chopping means (4) are connected directly to the converter stage (3) and **in that** it also includes a filtering stage (F) placed between the rectifying stage (15) and the converter stage (3).

13. Circuit according to claim 12, **characterised in that** the filtering stage (F) includes an inductance (L1) placed in the HT line (21) of the rectifying stage (15), and a diode (D'') placed between the HT (21) and LT (22) lines of the said rectifying stage, the anode of the diode (D'') being connected to the said LT line (22).

14. Circuit according to one of claims 10 to 13, **characterised in that** the control means (23) include means for correcting the motor / converter assembly power factor.
